# EUROPEAN PATENT APPLICATION

(11) **EP 4 008 221 A1**
(43) Date of publication of application: **08.06.2022**
(21) Application number: 21212153.7
(22) Date of filing: 03.12.2021
(51) Int. Cl.: A47F 10/02

(54) **SELF-SERVICE AND VIDEO COMMUNICATION TERMINAL**

(30) Priority: 04.12.2020 US 202063121542 P
(71) Applicant: Cleveron AS, 71020 Viljandi (EE)
(72) Inventor: KÜTT, Arti, 75312 Peetri, Rae vald, Harjumaa (EE); HIRVESAAR, Lauri, 10320 Tallinn (EE); SAAR, Henri, 13520 Tallinn (EE); PABUT, Ott, 10415 Tallinn (EE); KOEMETS, Kuldar, 71016 Viljandi (EE); KÜTT, Arno, 71073 Peetrimõisa village, Viljandi parish (EE)
(74) Representative: Berggren Oy

(57) **Abstract**

A system and a method are disclosed for providing goods and services for purchase via a self-service and communication terminal unit (100) and providing the ordered goods from a parcel terminal (300, 400) that is in communication with the communication terminal unit (100), and confirmation of ordered services from the communication unit (100).

## Description

### Priority

This application claims priority of U.S. provisional application number 63/121,542 filed on December 4th, 2020, the contents of which is incorporated herein by reference.

### Field of the invention

This invention relates to the field of self-service terminals, more specifically to self-service and communication terminals and methods for providing goods and services for purchase via a self-service and communication terminal unit and providing the ordered goods from a parcel terminal that is in communication with the communication terminal unit, and confirmation of ordered services from the communication unit. The invention relates also to the operational logics of self-service communication terminal units together with robotic or locker type parcel terminals for selling, storing, handing over and accepting parcels, packages, and other objects.

### Background of the invention

Several different automated or non-automated storage systems and vending devices are known. Methods where customers can make internet orders and receive ordered items from a parcel terminal are known. Also vending machines that are stocked with items have been known for a long time. However, there is need for devices that would provide to a retailer as well as to a customer more flexible options. There is a need for devices and methods that would allow customers to order items and services simultaneously, devices and methods to allow customers to communicate with the providers, and devices and methods for retailers to participate in selling goods and services from multiple locations.

Examples of currently know methods and devices include the following publications.

JP2001315967A discloses a system where certain community, for example employees of an office can make a shopping list on the internet for various goods and the service provider will get the orders from various stores, pack and deliver the items to the community. The publication discloses also an alternative that the order is made in a kiosk that is provided into the workplace. The kiosk has a communication unit, but it only can handle direct deliveries.

JP2019032769 is occupied with ready food orders and discloses a product inspection system comprising various terminals. The publication teaches a computer where the order is made, and which transmits the ordering data to an order receiving computer. The product provider fulfills the order and dispose the product into a handy terminal where the product is inspected e.g., via photographing. The product is then delivery to another handy terminal at the receiver end where the product is again inspected.

US2011/0035047 discloses a method for need based pickup of medicine packs using an automated storage facility. The storage facility contains various kins of medications and empty containers which will be filled automatically upon an order.

WO01/69553 discloses a vending system where more than one vending machine is connected to a product ordering window. The ordered products one paid are delivered via a product discharging unit which is physically connected to the vending machine and the items are transported by conveyor belts.

### Summary of the invention

It is an object of the invention to provide a computerized system to provide goods and services for purchase, the system comprising:
at least one self-service communication unit comprising at least one processor in communication with a server and equipped with at least an input device with user interface, a payment device, and a communication element comprising video and/or audio unit and/or text input unit allowing real time communication with a customer service by the at least one processor;
at least one automated parcel terminal comprising at least a processor in communication with the server and optionally at least one local database, said terminal being configured to be stocked with goods provided by at least one retailer; at least one database saved on the server comprising data (inventory) related to the stocked goods and available services and being updated in real time by at least one processor; wherein
when executed upon activation of the user interface the system is configured to retrieve real time information from the at least one database saved on the server and/or from the at least one local database of contents of the at least one parcel terminal and optionally of services available, and display the information on the user interface for a customer to select from and to pay at the payment device by the at least one processor; and wherein
the communication unit in communication with the server updates the database saved on the server (server database) and the optional local database determining status of the paid goods to be reserved; and
wherein in the communication unit the at least one processor is configured to provide the customer an identification code to retrieve the goods from the at least one parcel terminal, and to provide the customer an option to communicate via the communication element comprising audio and /or video and/or text-input device with the customer service to receive information of the optional service ordered and to procure a service agreement.

According to one aspect when the customer provides his/her identification code at the at least one parcel terminal, the code is checked against the at least one local database and if no match is found the code is checked against the at least one database saved on the server.

According to one aspect of the invention in the computerized system the communication unit is in communication with more than one parcel terminals and the parcel terminals are selected from robotic terminals, locker terminals or combinations thereof.

According to one aspect of the invention in the computerized system upon the customer retrieving the goods from the parcel terminal the at least one database saved on the server and/or the at least one local database is updated in real time to remove the item from the database and the system is further configured to provide the retailer or a logistic center information of retrieved goods and consequent need of fulfilment of terminal with replacement good.

According to a further aspect of the invention, in the computerized system the parcel terminal comprises a verification system to recognize mismatch between number and/or quality of items delivered for the customer to retrieve and number and/or quality of items actually retrieved by the customer, save the information into the at least one database and communicate the information to the communication unit the processor of which is configured to credit/debit overpayment/underpayment to the customer.

According to a further aspect of the invention, in the computerized system the at least one self-service communication unit is located in an independent location away from the at least one parcel terminal.

According to further aspect of the invention, in the computerized system more than one parcel terminals are in communication with more than one communication units.

It is an object of the invention to provide a computer implemented method to provide goods and /or services for purchase, the method comprising:
providing at least one automated communication unit comprising at least one processor in communication with a server and equipped with at least an input device with user interface, a payment device, a communication element comprising video and/or audio unit and/or text input unit;
providing at least one automated parcel terminal comprising at least one processor in communication with the server and optionally at least one local database, said terminal being stocked with goods provided by at least one retailer;
providing at least one database saved on the server and optionally at least one local database comprising at least data related to the stocked goods and being updated in real time; wherein
a customer is provided with
   a) an option to review via the user interface the items stocked in the at least one automated parcel terminal and to make a purchase by selecting one or more items and making a payment at the payment device, the customer receiving an identification code from the communication unit to a selected parcel terminal to retrieve the purchased item;
   b) an option to review via the user interface items that are not stocked in any of the automated parcel terminals but available by an order from the retailer or from a webshop and to select items from the retailer's listing or from the webshop, making a payment at the payment device and receiving information and an identification code for receiving the items from a selected automated parcel terminal at a defined time upon delivery of the ordered items to the automated parcel terminal;
   c) an option to review via the user interface services available, selecting one or more services, having an option to communicate with a customer service via the video/audio/text unit for signing any contract required for the service; and/or
   d) an option to create a return ticket for returning a bought item into a selected parcel terminal and to get credited for the paid price.

According to one aspect of the invention in the computer implemented method the parcel terminal comprises a verification system to recognize a mismatch between number and/or quality of items delivered for the customer to retrieve and number and/or quality of items actually retrieved by the customer, save the information into the at least one database and communicate the information to the communication unit the processor of which is configured to credit/debit overpayment/underpayment to the customer.

According to one aspect of the invention the verification system is based on radio frequency identification or on pixel comparison of photographs taken before and after the customer has retrieved items.

According to one aspect of the invention in the computer implemented method the services available are related to goods bought at same session at the self-service communication unit.

According to one aspect of the invention in the computer implemented method the services available are related to goods bought in earlier session at the self-service communication unit.

According to yet another aspect of the invention in the computer implemented method the services may be independent and not related to goods bought at the self-service communication unit.

The embodiments mentioned in this text relate, where applicable, to all aspects of the invention, even if this is not always separately mentioned.

### Short description of the figures

Some embodiments are described here by an example in the accompanying illustrations and should not be construed to limit the present disclosure.
Figure 1 illustrates the self-service communication unit according to this disclosure. Figure shows the self-service communication unit **100,** outer shell **101,** touch screen **102,** video communication system **103,** audio communication system **104,** payment devices **105,** label printer **106**.
Figure 2 illustrates a parcel terminal having two self-service communication units in connection with the parcel terminal. In this embodiment the parcel terminal is an automated robotic terminal. Figure shows the parcel terminal **300,** a retrieval/deposition unit (external console) **301**, and two self-service communication units **100**.
Figure 3 shows the self-service communication unit **100**. Unit is assembled on a support unit **200**.
Figure 4 shows an automated parcel terminal **300** with the retrieval/deposition unit (external console) **301** and a self-service communication unit **100** standing on an independent location. Unit is assembled on a support unit **200**.
Figure 5 shows various scenarios of the automated parcel terminals **300, 400** and self-service communication units **100** in communication with each other. Parcel terminals **300** are robotic terminals that may be e.g., tower shaped or cubic shapes, and parcel terminal **400** is a locker type of terminal.
Figure 6 shows the user interface displayed to a customer on the self-service communication unit. Shown are access to touch screen **102**, access to video communication system **103**, access to audio communication system **104**, access to payment devices **105**.
Figure 7 shows a flow chart illustrating procurement of preloaded goods i.e., goods that are stocked in a parcel terminal.
Figure 8 shows a flow chart illustrating ordering items that are not in stock i.e., the items are ordered from retailer who arranges delivery of the items to the selected parcel terminal.
Figure 9 shows a flow chart illustrating ordering items from a web-shop i.e., items are ordered via internet from retailers that may be same or different than those whose products are stocked in the terminal. The ordered items are delivered to the selected parcel terminal for example by a courier service.
Figure 10 shows a flow chart illustrating ordering services.
Figure 11 shows a flow chart illustrating returning items.
Figure 12 illustrates the communication between the parcel terminal's control unit and the server and the self-service communication unit's control unit and the server.

### Detailed description of the invention

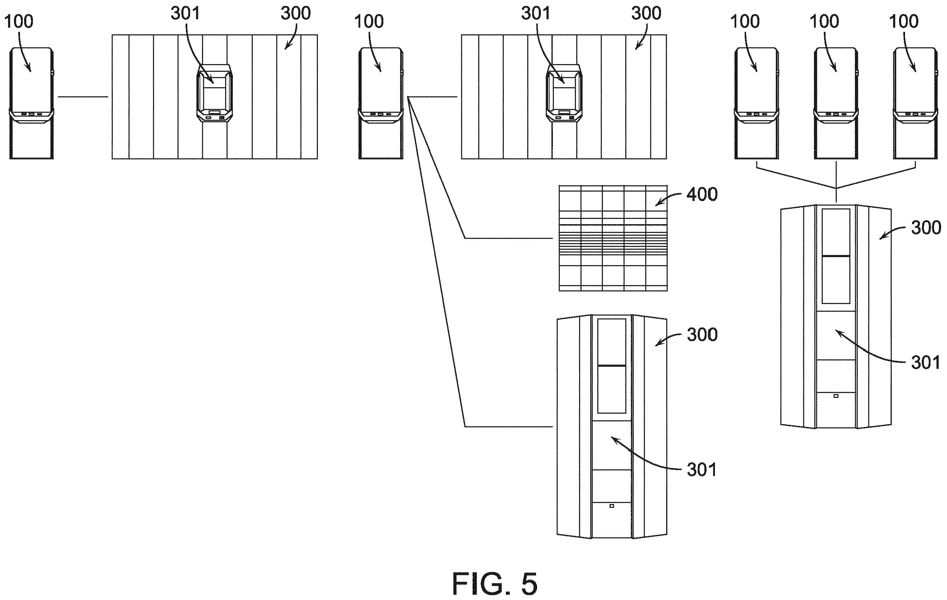

This disclosure describes a system and method having one or more self-service communication units **100** communicatively connected via a server to one or more self-service parcel terminals **300, 400** for direct procurements, ordering goods and/or services, returning items and controlling the operations of one or more self-service parcel terminal. The parcel terminals may be robotic **300,** or locker type terminals **400,** or any combinations of robotic and locker type terminals. Figure 5 shows various combinations of self-service communication units and self-service parcel terminals. The self-service communication unit enables the customers (users) to interact with one or more parcel terminals in a novel way and facilitates new operational and business logics for various services.

The disclosure provides one or more self-service communication units which are configured to allow the customer (user) to any of the following:
a) view items that are stored in any of the parcel terminals that are configured to be in communication with the self-service communication unit; and procure any of stored items from the selected parcel terminal through the self-service communication unit;
b) view non-stocked items available from participating retailers or from a web shop, and order any such items for delivery to a selected parcel terminal on a selected time;
c) communicating about a return of an item, selecting a parcel terminal where the item is to be returned and getting access to the selected terminal to return the item;
d) communicating with participating service providers to procure services related to items already purchased, or to be purchased, or to procure independent services;
e) real time communication, preferably via video or audio connection regarding items or services. These features are enabled by unique business method link between one or more self-service communication units and one or more parcel terminals, wherein the parcel terminal(s) may be robotic terminal, locker type terminal or combinations thereof and the self-service communication unit(s) may be adjacent to a parcel terminal or may be independently located.

According to certain aspects the communication unit may be supported (owned, rented, franchised) by one retailer in which case the customer can procure items or services from the one retailer. According to certain aspects the communication unit may be supported (shared) by several retailers, in which case the customer can procure items or services from various retailers.

According to certain aspects several communication units supported by same or different retailers are communicatively connected to one parcel terminal.

According to certain aspects one or more communication units are physically attached to one parcel terminal.

According to certain aspects one or more communication units are communicatively connected to one or more parcel terminals and the communication units are located in independent locations physically apart from the one or more parcel terminals.

It is to be understood that any combinations of communication units physically attached or adjacent to parcel terminals and communication units at independent locations are possible and within the embodiments of this invention.

### Self-service communication unit

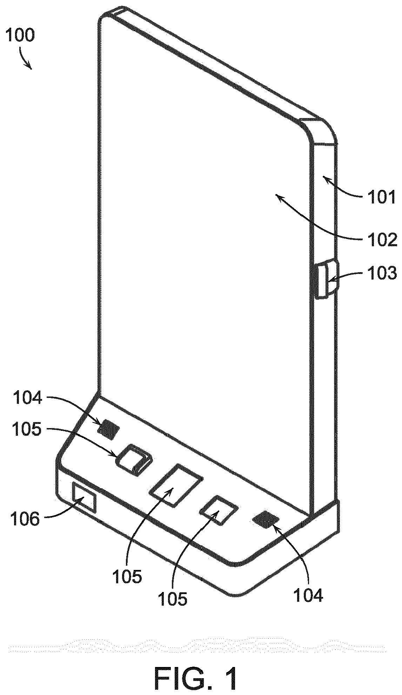

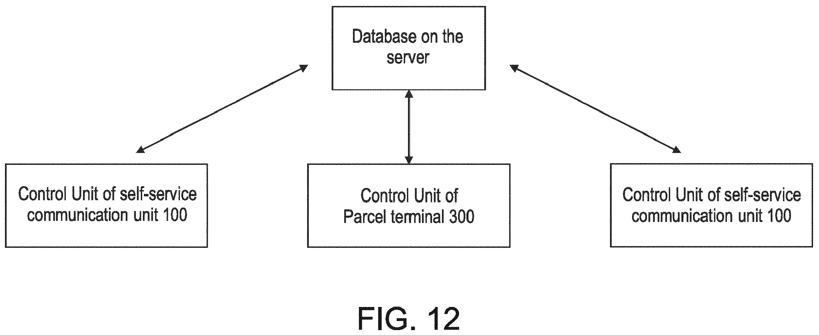

As is shown in Figure 1, the self-service communication unit **100** according to this invention comprises an outer shell **101** that acts as a support and connection point for various elements, a touchscreen or other activation/input device **102,** video communication system **103,** audio communication system **104,** payment devices **105** and a control unit (computing device, processor, controller) (shown in Figure 12). The communication unit may also include a text input device and a printer.

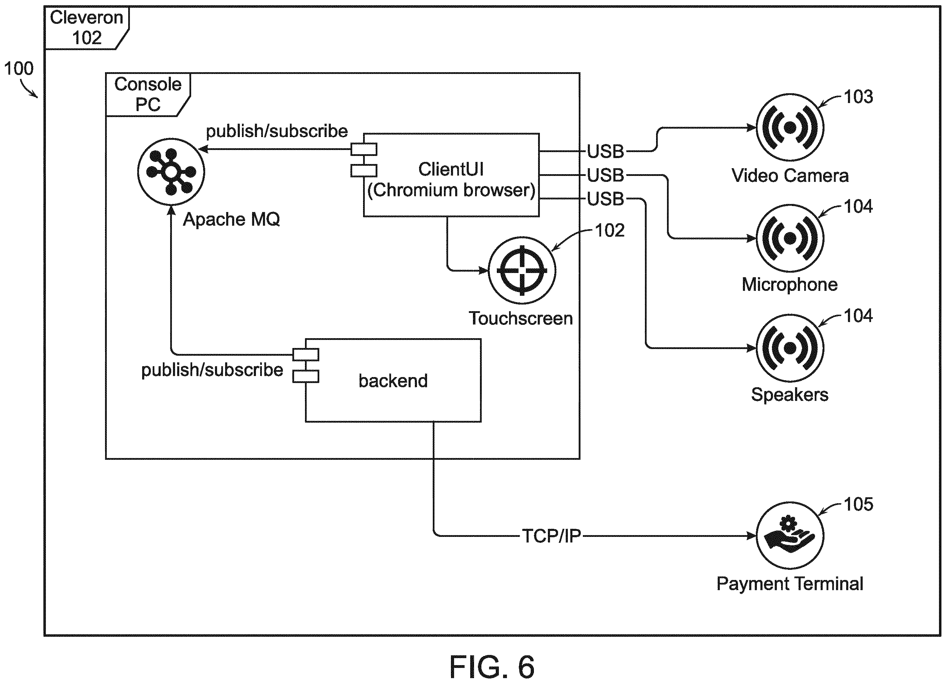

For the customer, the main feature of the self-service communication unit **100** is the touchscreen **102** or other activation/input device/method to display user interface which can be used in various ways depending on the situation and business needs. The touchscreen is an example of an input device. User interface can be used to search for items prestored in one or more parcel terminals that are in communication with the self-service communication unit. Alternatively, or additionally items that are not stocked in any parcel terminal but available upon request can be searched. User interface can be used to search services available via the self-service communication unit. Alternatively, or in addition, the user can search and procure various items from internet-based shops. Additionally, it is possible to use the built-in real time communication preferably via video communication system **103** and audio communication system **104** to communicate with one or more service providers in remote locations to procure services, e.g., services related to items bought such as, but not limited to insurance plans, installation, home delivery etc. The user can also via the user interface attain help regarding usage of the terminal or internet-based shop. Furthermore, the supporter of the self-service communication unit (e.g., an owner or franchisee of the self-service communication unit, or a retail store that is renting space in the parcel terminal, or a service provider that is providing their services via the unit) can use the screen to display advertisements and product promotions to clients while the terminal is not in use. To enable customer (user) to make onsite procurements, the self-service communication unit is equipped with a payment device **105**. In addition, a printer **106** for facilitating the printing e.g., return item labels is located on the self-service communication unit. The printer may also be used e.g., to print an electronically signed service agreement. Figure 6 shows an example of the user interface displayed to the user on the touch screen.

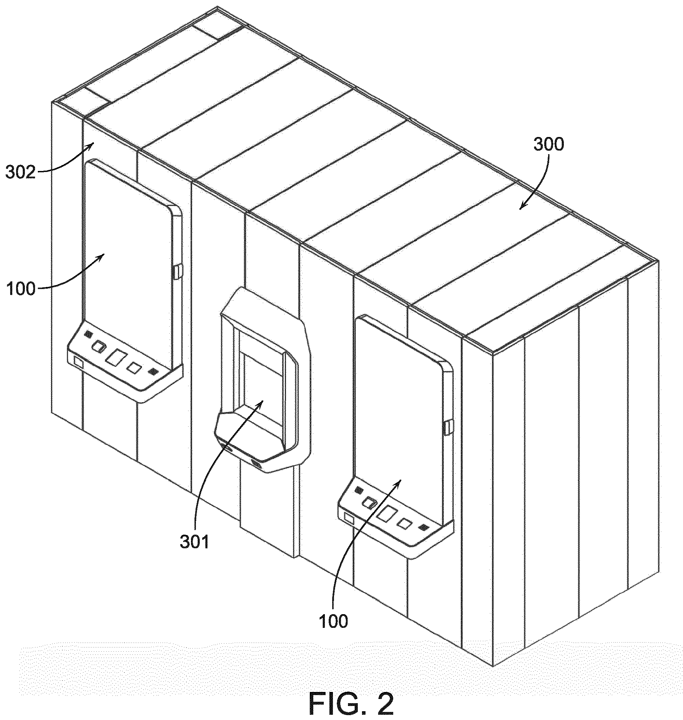

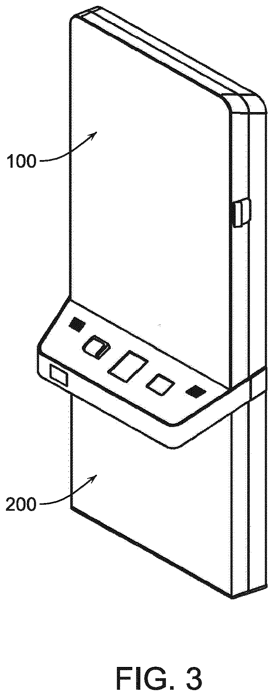

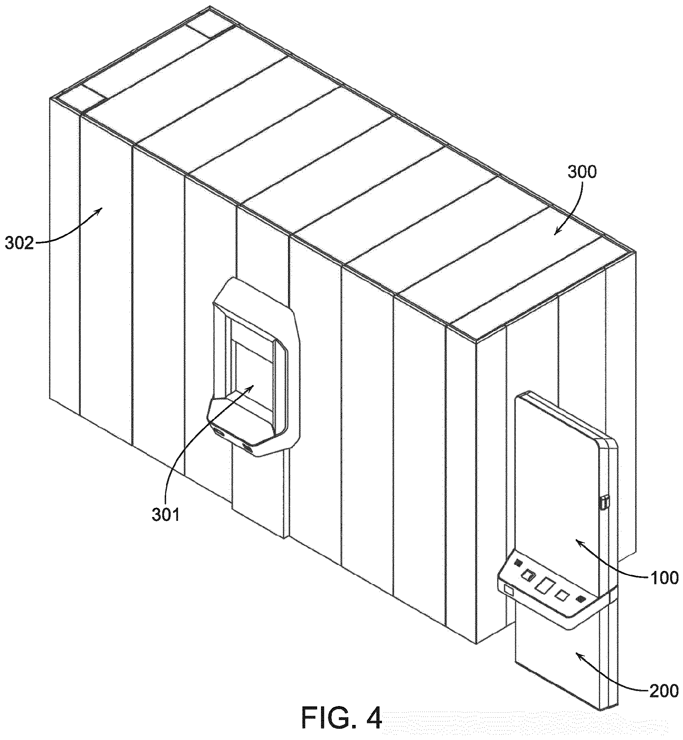

The self-service communication unit can be integrated onto the parcel terminal **300, 400** (Fig. 2) or equipped with a support platform **200** to be self-standing (Fig. 3), in which case the self-service communication unit may be attached on the parcel terminal (Fig. 2), or it may be located in the vicinity of or adjacent to the parcel terminal as is shown in Fig 4. The communication unit may as well be in an independent location as is show in Fig. 5. The communication unit may for example locate inside a shopping mall, while the parcel terminal is located outside near a parking lot of the mall.

Figure 6 shows an exemplary view of the touch screen/user interface displayed to the customer. Here, the user interface is based on a web browser, where a webpage is displayed, which could be a chromium browser or any other type of a browser. This webpage uses other components in the system to render. Backend is a middleware layer that facilitates communication with devices that are not directly reachable from the browser. Here, backend is a nodeJS service that is ran as a system process, however the nodeJS is an example of a specific programming language which could be replaced with a suitable alternative such as for example ASP.NET or Java. All these programming languages are mentioned here as nonlimiting examples, and a skilled artisan would be able to select any suitable language other than the mentioned ones. Backend connects to ActiveMQ service and subscribes to queues based on what modules are enabled. ActiveMQ - Apache ActiveMQ is a messaging broker that facilitates communication between user interface and backend. It is to be understood that instead of an ActiveMQ alternative messaging brokers such as RabbitMQ or ZeroMQ could be used. Again, the mentioned messaging brokers are mentioned here as nonlimiting examples, and a skilled artisan would be able to select any suitable broker other than the mentioned ones. In an alternative embodiment the backend could be build up in a manner where messaging broker is not used, and backend connects directly to the user interface.

Touchscreen is a device that facilitates touch input from the user. Instead of a touchscreen any other possible input mechanism may be used. Input is passed to the browser as system events. Video Camera is camera that is exposed to user interface as a system device. Here, user interface accesses the camera via API, which could be JavaScript API or any API dependent on the programming language used for the backend. Microphone is a microphone that is exposed to user interface as a system recording device. Here, user interface accesses the microphone via API, which could be Java script API or any API dependent on the programming language used for the backend.

Speaker is a speaker that is exposed to user interface as a system audio device.

Computer and database description:

### Parcel terminal:

The parcel terminal may be a robotic terminal, a locker type terminal, or a combination thereof. A robotic terminal has a computer controlled transportation system to move the items to and from the terminal, a transportation system may include loader(s), conveyor(s), and/or other moving elements. The transportation system is configured to transport items from inside the terminal to an external console and vice versa. A locker type terminal has doors or drawers openable upon request. The parcel terminal may be connected to a server in order to process data, generate identification codes (entry codes, retrieval codes, return codes) and for identifying users with a web application or smart device application, as well as communicating with one or more communication units.

The parcel terminal may comprise one or more local databases comprising information of the contents (inventory) of the parcel terminal, identification codes, and other relevant information enabling retrieval and/or deposit of items to and from the terminal. The one or more local databases are synchronised with the server databases on regular basis. Alternatively, or in addition the inventory, identification codes and other relevant information is saved on the server database.

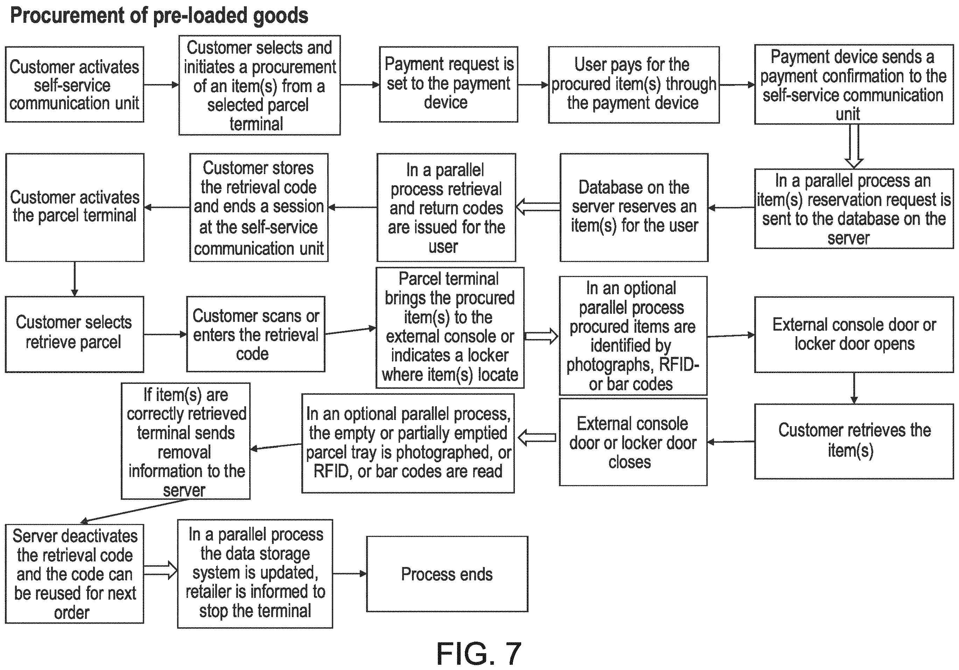

The parcel terminal may include computing hardware for carrying out the above-noted functionalities (Figures 7-11) and other functions, processes, steps, etc. of this disclosure. In an embodiment, the parcel terminal may include a first computing device, such as a general purpose computer having a computer-readable memory with instructions and a processor executing those instructions, that provides the user interface, effects communications with the server, and initiates commands to move transportation elements such as a loader in a robotic terminal and other mechanical components of the terminal.

The parcel terminal may further include a second computing device that controls movement of the transportation elements such as a loader, and other mechanical components. The second computing device may receive movement commands from the first processing device and transmit movement instructions to the mechanical components. The second computing device may be a programmable logic controller (PLC), in an embodiment. The second computing device may also control opening and closing of the console door in a robotic terminal or opening and unlocking doors in locker type of terminal, it may be responsive to input from the motion sensor, scanner, and/or first computing device.

It should be noted that, although specific computing hardware is noted above for the first and second computing devices, any type of appropriate computing hardware may be used for any computing device in the parcel terminal, including but not limited to a general-purpose computer, a PLC, another programmable logic device (PLD), an application-specific integrated circuit (ASIC), etc. Further, it should be noted that functions, processes, steps, etc. of this disclosure that are carried out by such computing devices may be embodied in any combination of software, digital hardware, and analog hardware. Still further, although two computing devices are explicitly described above, it should be appreciated that the functions, processes, steps, etc. of this disclosure may be carried out by a single computing device, by two computing devices, or by more than two computing devices of the parcel terminal.

### External console:

In case the parcel terminal is robotic, it has an external console **301**. The external console is preferably attached onto the outer shell **302** of the terminal. The external console serves as an interaction area of the terminal. The external console has a door that opens when valid credentials are presented. The customer may retrieve ordered items from the terminal or return items to the terminal via the console. According to a preferred embodiment, the external console comprises a touch screen, scanners, an NFC (near field communication) module and an ADA (Americans with Disabilities Act) -compliant headphone jack with a volume control button. The external console further comprises a controller, and preferably a motion detector, touchscreen, a speaker and a microphone. A customer picking up his/her order(s) from the terminal will enter his/her credentials via the console. The credentials may be an identification code or order number provided to the customer at the communication unit, but it may also include, for example customer's identity, and/or identification of items that are picked up this time. According to a preferred embodiment the credentials are created by the self-service communication unit which has via the server, communicated the credentials to the parcel terminal and the credentials are saved in a local database in the parcel terminal and/or in the central database on the server.

### Controller flow step by step

Figure 12 shows illustratively the control units in the parcel terminal **300, 400** and self-service communication unit **100**. It is to be understood that more than one parcel terminal may be communicatively connected to one or more self-service communication units through the central server. The control units in the self-service communication unit may receive information (or signal) entered via the touchscreen (via the user interface) of the self-service communication unit, and the control units may transmit the entered information to the central server in self-service communication unit **100.** The central server would determine how many and which parcel terminals are communicatively connected to the self-service communication unit, verify whether the entered information is correct and then transfer the information to the designated parcel terminal. It is also to be understood that one or more parcel terminals may be communicatively connected to one or more self-service communication units through a central server and the parcel terminals would transfer information to the self-service communication units through the central server. The information may also be saved on one or more local databases in the parcel terminals and such local databases are updated.

### Parcel terminal

The parcel terminal may be a robotic terminal, or it may be a locker type terminal, or the terminal may be a combination of robotic and locker terminal. The terminal may have a rectangular form, it may be a polygonal or cylindrical tower, or it may have any other feasible form. A robotic terminal has user interface for a customer to activate a computer-controlled transportation system of the terminal by presenting an identification code (credentials) received from the self-service communication unit. The transportation system will upon confirmed identification code retrieve determined items from the shelving or storage system inside the terminal and bring them to a retrieval area (external console) for the customer. A locker type terminal similarly has a user interface via which the user can activate the terminal to open a door or a drawer of locker upon presentation of an identification code received from the self-service communication unit which the terminal confirms before opening the door. In both robotic terminal and in locker type terminal, the terminal has a recognition system for identifying the credentials of the user and the item(s) to be retrieved. The recognition system includes the identification code that the user retrieved from the communication unit when making the order. The code may be entered via a keyboard, or it may be scanned or otherwise entered after which the parcel terminal verifies the code from the local database or alternatively communicates with the server to verify the code and opens the locker or delivers the purchased item(s) to the external console if the code was recognized and matched with an item.

The invention is now described by means of non-limiting examples. The examples are also described in Figures 7-11. A skilled artisan would understand that a method shown in the figures may contain more or less steps depending on specific situation.

### Example case 1 - procurement of pre-loaded goods (Figure 7)

Customer enters to the self-service communication unit and touches the screen to activate the touchscreen. Customer uses the touchscreen to scroll through a list of goods that have been preloaded (stocked) into a parcel terminal in communication with the communication unit.

The parcel terminal may locate adjacent to the communication unit, but it may locate in an independent location. It is possible also that the parcel terminal has stocked items from one or more retailers and the customer may use the touchscreen to select one retailer and then review what items the selected retailer has available in the parcel terminal. It is also possible that several parcel terminals in several different locations are in communication with the communication unit, and in that case the customer may select which parcel terminal's content he/she is interested in.

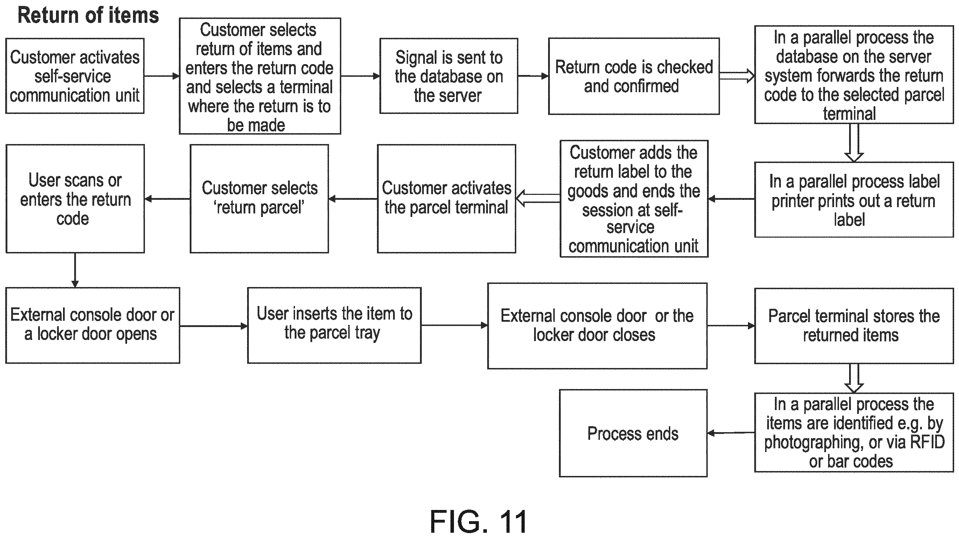

Once the customer has chosen a desired item, the communication unit requests a payment to be made at the payment device on the communication unit. Once the payment is confirmed, a signal (information) is sent to the database saved on the server. The server reserves the paid item for the customer and issues an identification code which the customer is to enter at the parcel terminal to retrieve the bought item. The identification code may be shown on the touchscreen of the communication unit, printed out on a paper, or sent to the client through e-mail or SMS. It is possible also that a return code is issued at the same time so that in case the customer wants to return the item she/he can enter make the return at a selected terminal (see Example 4 and figure 11 for return).

In case the customer has procured multiple pre-loaded goods, preferably a single identification code is issued, just multiple items are reserved under the same code. Simultaneously database on the server forwards the identification code to the parcel terminal which makes it possible to retrieve the reserved items.

It is possible also that the customer selects a time frame when he is going to retrieve the items from the parcel terminal. If such time frame is indicated the information is saved to the database on the server and forwarded to the parcel terminal where it may be saved in a local database.

The database on the server is also updated in real time, such that the item reserved to the customer is no more available to other customers from the moment the payment was made. Moreover, the system updates a database accessible to the retailer so as to keep the retailer notified that the customer is to remove the item from the parcel terminal and thus the retailer can fill the parcel terminal with a new item. Upon the retailer stocking new item into the parcel terminal the controller of the parcel terminal will send information of the newly added items to the central database, which is updated accordingly, and new item will be shown by the self-service communication unit for next customers.

Once customer has ended the session at the communication unit the customer can interact with the parcel terminal by entering the identification code for example by pin-pad or barcode scanner. If a correct code is confirmed by the terminal, the parcel terminal will open a locker door or drawer if the terminal is locker type terminal or initiate a retrieval system to bring the bought item to the external console of the parcel terminal for retrieval if the terminal is a robotic terminal.

Once the goods have been removed or certain predetermined time has passed, the parcel terminal will close the session. In case goods were removed, the identification code will become obsolete (deactivated), and the parcel terminal controller will send the database on the server information regarding the removed goods so that the retailer can reload the terminal. In case goods were not removed, the identification code will stay active for the client for a certain period designated by the supporter of the parcel terminal. In case customer procured multiple goods stored on multiple locations in the terminal, the process of opening the lockers or drawers or bringing the parcels to the external console and removing the goods is repeated until all procured goods have been received by the customer.

In case a customer is retrieving multiple items at same time and the items are stored on a same location in the parcel terminal (e.g., one locker compartment, or one container or tray in robotic terminal) according to one aspect of the invention the number of items that were removed can be verified and compared with the number of items that were procured. This aspect applies to all the examples shown in figures 7-11. In a particular embodiment where a parcel terminal is a robotic terminal with an external console, the verification system may be based on radio frequency identification. In this embodiment each of the items placed on a container or a tray would be equipped with a radio frequency transponder and the external console would feature a radio frequency reader. The number of signals or items on a tray would be identified before the tray or container is delivered to the external console by capturing the transponder signals with the reader. Once the customer has retrieved the items from the container, the container or tray would be pulled back into the terminal, the console door would be closed, and the transponder signals would be read again by the radio frequency reader. The number of procured items would be compared to the number of items on the tray or container before and after customer retrieval and the inventory would be automatically evaluated in real time. In case the customer did not take all the items she/he bought, a mismatch in the inventory is recognized and an alarm would be sound, or a message would be displayed to the customer. In order to rectify the situation, the parcel terminal will deliver the container or tray back to the external console for the customer to pick the remainder of items. In case the tray or container included erroneously more items than what the customer ordered but the customer picked all items a mismatch is again recognized, and the customer is alerted to return the erroneously picked item to container or tray that is presented on the external console. In case client refuses to rectify the situation, information of the mismatch is sent via server to the central database and the self-service communication unit for comparison of overpayment/underpayment. The controller in the unit causes an appropriate sum to be credited/debited from/to the credit card used for procurement of items or from the user account of the client in a web-based client environment such as a loyalty system of the retailer.

The radio frequency-based system would be also deployable to a locker type of parcel terminal where each slot i.e. locker cabinet or drawer could be equipped with its own reader, or few powerful readers would read multiple slots and match the special deposition of items to the slot registry. Similarly, in case of a mismatch recognized, the customer would be alerted to retrieve an item not picked or return an item erroneously picked to a locker or drawer the door of which would be openable to the customer.

In an alternative embodiment the items would be identified by photographing the items on a container or tray before the container or tray is delivered to the external console for customer to retrieve. Once the customer has retrieved the items the container or tray is automatically pulled back to the robotic terminal, and a second set of photographs are taken to define the number of goods remaining in the container or on the tray. Artificial intelligence would employ pixel compare method based on a set of previously taken training images to determine in real time if the number of items procured is equal to the number of items removed. In case of mismatch again an alarm would be sound, or a message would be displayed to the client to rectify the situation by returning extra items or picking up remaining items. The pictures could also be compared manually only in case mismatches in inventory become evident. The manual comparison could be narrowed down to a product group and/or a timestamp taken from the central server. Identification by photographing could also be used in case of a locker type terminal. The contents of the locker would be photographed before opening the locker door and after closing the door and similarly conduct pixel comparison of the images.

In an alternative embodiment the identification of the items both in a robotic as well as in locker type terminal can be conducted by reading bar codes of the items before and after customer emptying the tray, container, or locker.

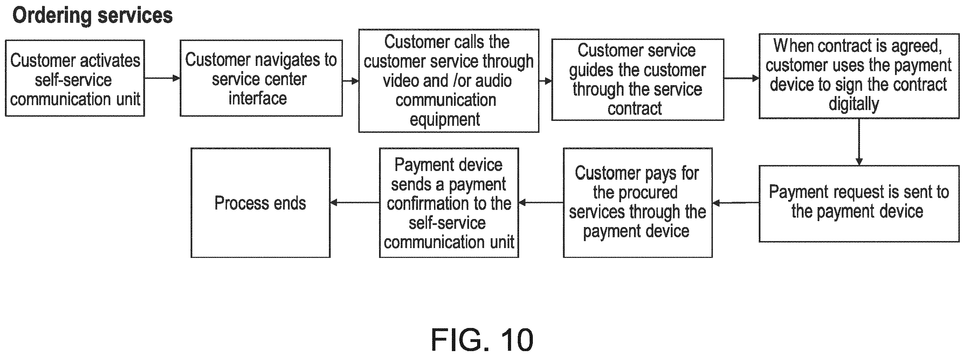

It is also possible that the customer can order services related to the items ordered, for example insurance plans, installation service, car rental to take the item home etc. The customer has access to help desk, customer service, or consultation via the video and/or audio functionalities of the communication unit regarding the services requested. Service order is explained in figure 10 and in Example 3. Same logic applies here.

Furthermore, it is also possible that simultaneously when issuing and providing an identification code to the customer, the system would also provide a return code in case the customer wants to return the item (description in example 4).

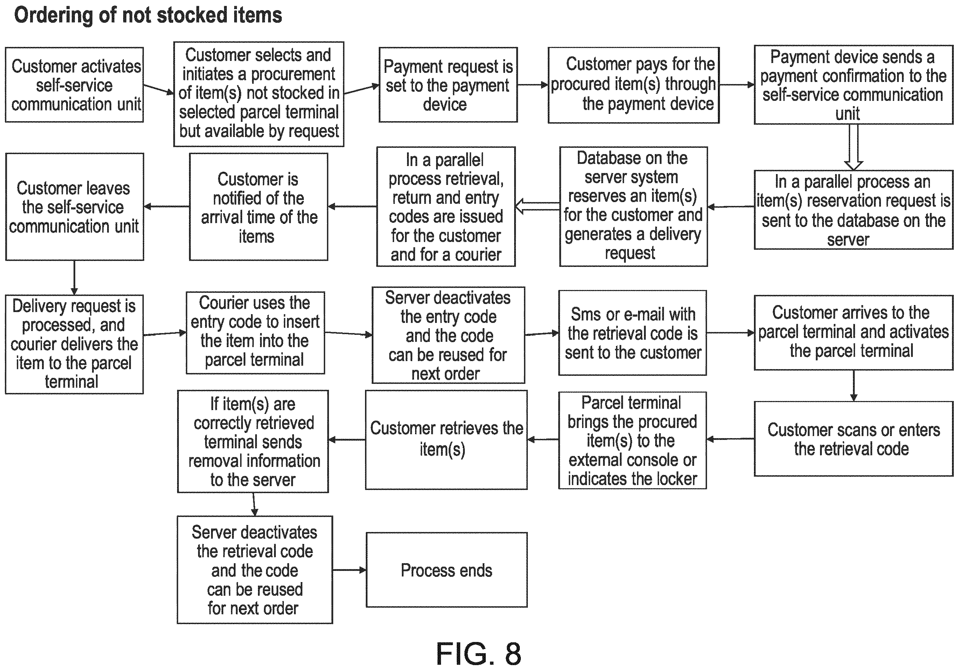

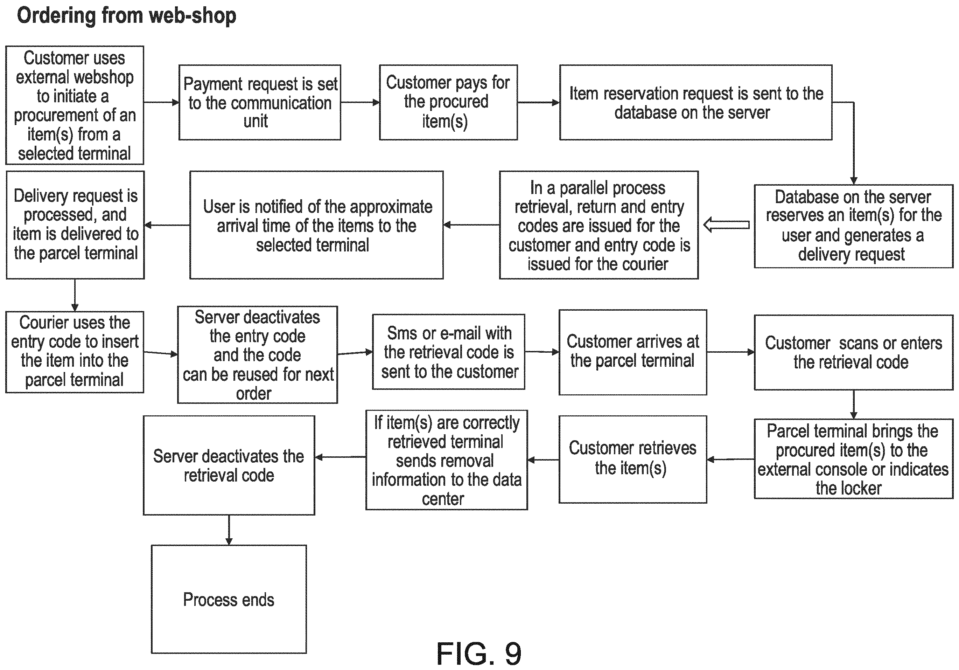

### Example case 2 - ordering of non- stocked items (figure 8, 9)

Customer enters the self-service communication unit and touches the screen to activate the touchscreen. Customer uses the touchscreen to look through the list of goods that are stored in one or more parcel terminals. The item may be available upon request to be delivered to a selected terminal (Figure 8). Alternatively, the item may be ordered from a web-shop to be delivered to a selected terminal (Figure 9). The customer can open a list of one or more web-shops delivering items to the one or more of the parcel terminals upon request. It is also possible that the customer directly enters the web shop listing without checking the parcel terminal's contents or the available at request -listing. It is also to be understood that the customer may first check the contents of one or more parcel terminals for stocked items as is explained in Example 1 and after that search for non-stocked items.

Once customer has chosen a desired item that is available upon request or available from a selected web-shop, she/he may be instructed to choose a parcel terminal if there are more than one parcel terminal in communication with the communication unit. The customer may also be informed of estimated arrival time of the selected items to the selected parcel terminal. The communication unit then requests a payment for the selected items. Customer uses the payment devices to pay for the goods and once payment is confirmed, and information of the order is provided to the customer at the communication unit and sent to the database on the server.

It is also possible that the customer can order services related to the items ordered, for example insurance plans, installation service. The customer has access to help desk, customer service, or consultation via the video and/or audio functionalities of the communication unit regarding the services requested. Service order is explained in figure 10 and explained in Example 3. Same logic applies here.

The data storage system reserves an item for the customer from a central warehouse, generates identification codes (retrieval code for customer to retrieve the item(s) and entry code for courier to deliver the item(s) and sends a delivery request to a logistics department. In case the customer has procured multiple items, preferably a single entry and identification code is issued, just multiple items are reserved under the same code. Customer is notified of approximate arrival time of the items to the selected parcel terminal, and the session with the customer at the communication unit is closed. The communication unit sends a delivery request via the server and the identification code (entry code) to the retailer, logistic department, or warehouse where the delivery request is processed. A courier delivers the item(s) to the selected parcel terminal and the courier uses the identification code (entry code) to insert item(s) into the terminal. Once items have been inserted, the parcel terminal is in communication with the central database that is updated with the delivered item and its location. The system would send the identification code (retrieval code) to customer e.g., through email or SMS and the code is communicated to the parcel terminal where it can be stored in a local database. Alternatively, the information can be communicated to the self-service communication unit which is configured to create an identification code to be sent to the customer. The identification code is updated to the central data base and communicated to the parcel terminal as well.

Customer arrives to the parcel terminal and enters the identification code for example by pin-pad or barcode scanner. If a correct code is confirmed by the processor of computerized parcel terminal, the parcel terminal will bring the item to the external console of the parcel terminal for retrieval in case the parcel terminal is a robotic terminal. In case the terminal is a locker type of terminal, the door of the locker or drawer is opened for the customer to retrieve the items. Once the items have been removed or certain time has passed, the parcel terminal will close the session. In case goods were removed, the identification code will become obsolete (deactivated), and the parcel terminal controller will send the central data storage system information regarding the removed items. In case items were not removed, the identification code will stay active for a predetermined period designated by the supporter of the parcel terminal. In case customer procured multiple items that were stored on multiple locations in the parcel terminal, the process of bringing parcels in case of robotic terminal or opening the lockers in case of locker type of terminal is repeated until all procured items have been received by the customer.

The number of items that were removed can be verified and compared with the number of items that were procured. This verification system is explained in Example 1 and the same logic would work in this case.

It is also possible that simultaneously when issuing and providing an identification code to the customer, the system would also provide a return code in case the customer wants to return the item (description in example 4).

### Example case 3 - ordering services (Figure 10)

Customer enters the communication unit and touches the screen to activate it. Customer uses the touchscreen (user interface) to navigate to a service center interface and communicates with customer service either via a messenger feature on the touch screen or via video or audio feature. Installed video and audio communication devices are used to create a customer experience that is as close as possible to real life meeting as video and audio are transmitted in both directions and client can see the customer service representative on the touchscreen. Customer service representative guides the customer through the service contract explaining options and obligations. When conditions are agreed, customer is provided with a possibility to sign the contract by using the touch screen. Once contract is signed, payment request is sent to the payment devices to pay for the services. Customer uses the payment devices to pay for the service and once payment is confirmed, a signal is sent to the customer and to the central data storage system and procurement of services is confirmed. It is to be understand that ordering services can take place independently of purchasing any items via the communication unit, but it is possible to use the service ordering function in any of the item purchase functions described in the examples here.

The services the customer may order from the communication unit may include services that are related to an item that the customer already ordered in an earlier session or ordered during the same session. The services could include among others insurance policies for the ordered items, rental agreements for ordered items, installation services for ordered items, home delivery of ordered items, car rental for moving the item from the parcel terminal, agreements to continuing orders e.g., delivery of similar item every second month to the selected parcel terminal. In certain cases the services may be related to items the customer has bought from a physical store. In certain cases the services could also include services that are not related to any physical item.

### Example case 4 - return of items (Figure 11)

Customer enters the communication unit and touches the screen to activate it. Customer uses the touchscreen to navigate to a return interface and enters an identification code for return which was created at the time of purchasing the item. Note that even creating identification code for return may be part of any of the previous examples as well. The customer has on option to select parcel terminal if there are several terminals communicating with the communication unit. The control unit of the communication unit is configured to send a signal to the central data storage system and code is confirmed. Label printer prints out a return label or a label may be sent to customer e.g., via email for self-printing for customer to attach the label to the item that shall be returned. The item to be returned may have been bought via the same or a different communication unit or it may have been bought via internet or in certain embodiments even from a physical store. Simultaneously, the central data storage system forwards the identification code to the parcel terminal thus enabling entering the items in selected parcel terminal.

Once the customer has ended the session at the communication unit, the customer can interact with the parcel terminal by entering the identification code for example by pin-pad or barcode scanner. If a correct code is confirmed by the parcel terminal processor the parcel terminal will bring an empty container or tray to the external console of the parcel terminal for return in case the parcel terminal is robotic term inal, or an empty locker or drawer is opened for return of the item if the term inal is a locker type terminal. Once the items have been entered, the parcel terminal will close the external door and photograph the state of the items. In case of mismatches in inventory, the photographs of items in question can be manually or automatically checked to determine which customer has returned incorrect or number of items or items in unacceptable state. The verification may also take place by reading RFID codes on the items. Information of the number and condition of items is communicated via the server to the central data base which is updated. In case correct number of items is returned in intact condition and the returned items are matched with the original order, the controller of the communication unit is configured to create a credit payment to the customer's credit card or account, or alternatively the information is sent to central data storage which is configured to communicate the need of credit payment e.g., with retailer to make the payment.

In case items were not entered, the identification code will stay active for the customer for a certain predetermined period designated by the supporter of the parcel terminal. In case client returns multiple goods to be stored on multiple locations in the parcel terminal, the process of bringing the parcel container or tray or opening a locker door and storing the parcel is repeated until all items to be returned have been entered by the customer.

Element listing
- 100: - self-service communication terminal unit
- 101: - outer shell
- 102: - touchscreen
- 103: - video communication system
- 104: - audio communication system
- 105: - payment devices
- 106: - label printer

- 200: - support platform

- 300: - parcel terminal
- 301: - external console
- 302: - parcel terminal outer shell

- 400: - locker type parcel terminal

## Claims

1. A computerized system to provide goods and services for purchase, the system comprising:
at least one self-service communication unit (100) comprising at least one processor in communication with a server and equipped with at least an input device with user interface, a payment device (105), and a communication element comprising video and/or audio and/or text input unit allowing real time communication with a customer service by the at least one processor;
at least one automated parcel terminal (300, 400) comprising at least one processor in communication with the server and optionally at least one local database, said terminal (300, 400) being configured to be stocked with goods provided by at least one retailer;
at least one database saved on the server comprising data related to the stocked goods and available services and being updated in real time by at least one processor; wherein
when executed upon activation of the user interface, the system is configured to retrieve real time information from the at least one database saved on the server and/or from the at least one local database of contents of the at least one parcel terminal (300, 400) and optionally of services available, and display the information on the user interface for a customer to select from and to pay at the payment device (105) by the at least one processor; and wherein
the communication unit (100) in communication with the server updates the database saved on the server and the optional local database determining status of the paid goods to be reserved; and
wherein in the communication unit (100) the at least one processor is configured to provide the customer an identification code to retrieve the goods from the at least one parcel terminal (300, 400), and to provide the customer an option to communicate via the audio and/or video and/or text input unit with the customer service to receive information of the optionally ordered service(s) and to procure a service agreement.

2. The system of claim 1, wherein the communication unit (100) is in communication with one or more parcel terminals (300, 400), and the parcel terminals (300, 400) are selected from robotic terminals, locker terminals and combinations thereof.

3. The system of claim 1 or 2, wherein upon the customer retrieving the goods from the parcel terminal (300, 400) the at least one local database and/or the at least one database saved on the server is updated in real time to remove the item from the database and the system is further configured to provide the retailer or a logistic center information of retrieved goods and consequent need of fulfilment of the terminal (300, 400) with replacement good.

4. The system of any of previous claims, wherein the parcel terminal (300, 400) comprises a verification system to recognize mismatch between a number and/or quality of items delivered for the customer to retrieve and a number and/or quality of items actually retrieved by the customer, save the information into the at least one local database and/or the database saved on the server, and communicate the information to the communication unit (100) the processor of which is configured to credit/debit overpayment/underpayment to the customer.

5. The system of claim 4, wherein the verification system is based on radiofrequency identification before and after the customer retrieves the item(s) or on pixel compare method of photographs taken before and after the customer retrieves the item(s).

6. The system of claim 5, wherein the system is based on radiofrequency identification and each item to be retrieved has a RF-transponder and an RF reader is located in a console of a robotic parcel terminal, or in case of locker type terminal one or more slots have an RF reader capable of reading one or more slots.

7. The system of any of the previous claims, wherein the at least one self-service communication unit (100) is located in an independent location away from the at least one parcel terminal (300, 400).

8. The system of any of the previous claims, wherein more than one parcel terminals (300, 400) are in communication with more than one communication units (100).

9. A computer implemented method to provide goods and/or services for purchase, the method comprising:
providing at least one automated communication unit (100) comprising at least one processor in communication with a server and equipped with at least an input device with user interface, a payment device (105), a video and/or audio and/or text input unit;
providing at least one automated parcel terminal (300, 400) comprising at least one processor in communication with the server, said terminal (300, 400) being stocked with goods provided by at least one retailer;
providing at least one database saved on the server and optionally at least one local database comprising at least data related to the stocked goods and being updated in real time; wherein
a customer is provided with
a) an option to review via the user interface the items stocked in the at least one automated parcel terminal (300, 400) and to make a purchase by selecting one or more items and making a payment at the payment device, the customer receiving an identification code from the automated communication unit (100) to selected parcel terminal (300, 400) to retrieve the purchased item;
b) an option to review via the user interface items that are not stocked in any of the automated parcel terminals (300, 400) but available by an order from the retailer, or from a webshop, and to select items from the retailer's listing or from the webshop, making a payment at the payment device (105) and receiving information and an identification code for receiving the items from a selected automated parcel terminal (300, 400) at a defined time upon delivery of the ordered items to the automated parcel terminal (300, 400);
c) an option to review via the user interface services available, selecting one or more services, having an option to communicate with a customer service via the video and/or audio and/or text input unit for signing any contract required for the service; and/or
d) an option to create a return ticket for returning an earlier bought item into a selected parcel terminal (300, 400) and to get credited for the paid price.

10. The computer implemented method of claim 9, wherein the parcel terminal (300, 400) comprises a verification system configured to verify return of the items before the paid price is credited.

11. The computer implemented method of claim 10, wherein the verification system is based on radiofrequency identification of items returned and/or photographing the items returned.

12. The computer implemented method of claim 11, wherein the verification system is based on radiofrequency identification and each returned item has an RF-transponder and an RF reader is located in a console of a robotic parcel terminal, or in case of locker type terminal one or more slots have an RF reader capable of reading one or more slots.

13. The computer implemented method of claim 9, wherein the services available are related to goods bought at same session at the self-service communication unit (100).

14. The computer implemented method of claim 9, wherein the services available are related to goods bought in earlier session at the self-service communication unit (100).
